# EUROPÄISCHE PATENTSCHRIFT

(11) **EP 2 941 803 B1**
(45) Veröffentlichungstag und Bekanntmachung des Hinweises auf die Patenterteilung: **04.01.2017**
(21) Anmeldenummer: 14793031.7
(22) Anmeldetag: 14.10.2014
(51) Int. Cl.: H02G 3/22, F16B 37/08

(54) **VORRICHTUNG ZUM VERSPANNEN VON GEGENSTÄNDEN**
DEVICE FOR CLAMPING ARTICLES
DISPOSITIF DE SERRAGE D'OBJETS

(30) Priorität: 14.10.2013 DE 202013104632 U; 24.01.2014 DE 202014100298 U
(43) Veröffentlichungstag der Anmeldung: 11.11.2015
(73) Patentinhaber: Schulte-Elektrotechnik GmbH & Co. KG, 58515 Lüdenscheid (DE)
(72) Erfinder: MENGES, Jürgen, 58553 Halver (DE); SCHULTE, Siegfried, 58515 Lüdenscheid (DE); RITTINGHAUS, Hendrik, 58579 Schalksmühle (DE)
(74) Vertreter: Patentanwälte Dörner & Kötter PartG mbB
(86) Internationale Anmeldenummer: PCT/EP2014/072053
(87) Internationale Veröffentlichungsnummer: WO 2015/055678

(56) Entgegenhaltungen:
- EP-A1- 1 256 288
- EP-A2- 1 016 797
- DE-A1- 2 546 831
- DE-A1- 19 527 738
- DE-A1- 19 701 371
- FR-A- 1 155 930
- FR-A1- 2 289 794
- FR-A1- 2 926 835
- US-A- 2 807 854

## Beschreibung

Die Erfindung betrifft eine Vorrichtung zum Verspannen von Gegenständen an Geräteplatten, umfassend einen Träger, der an seinem einen Ende mit einem Flansch versehen ist und einen mit einem Außengewinde mit mindestens einem Gewindegang versehenen Ringmantel aufweist, auf das ein Gewindering aufschraubbar ist, der ein Innengewinde mit mindestens einem Gewindegang aufweist.

Vorrichtungen der eingangs genannten Art sind an sich bekannt. So ist beispielsweise aus der EP1 256 288 A1 eine elektrische Anschlusssäule als Einschubteil bekannt, die mittels einer Vorrichtung der eingangs genannten Art an einer Geräteplatte befestigt werden kann. Bei der Geräteplatte kann es sich um eine Tischplatte handeln; es kann jedoch auch eine Wandplatte oder beispielsweise eine Bodenplatte eines Schranks oder dergleichen zur Befestigung herangezogen werden.

Mit den bekannten Vorrichtungen ist eine einfache und zugleich zuverlässige Befestigung der jeweiligen Gegenstände an den Geräteplatten möglich. Allerdings weisen die Vorrichtungen den Nachteil auf, dass zum Verspannen oder Lösen der Vorrichtungen der Gewindering über den gesamten Ringmantel verschraubt werden muss. In Abhängigkeit der Länge des Ringmantels ist dies recht umständlich.

Hier will die Erfindung Abhilfe schaffen. Der Erfindung liegt die Aufgabe zugrunde, eine komfortablere und zugleich schnellere Bedienung der Vorrichtung zu ermöglichen. Gemäß der Erfindung wird diese Aufgabe dadurch gelöst, dass die Gewindegänge des Innengewindes und die Gewindegänge des Außengewindes Unterbrechungen aufweisen, deren Breite größer als die Breite der Gewindegänge ist.

Mit der Erfindung ist eine Vorrichtung zum Verspannen von Gegenständen an Geräteplatten geschaffen, die komfortabler und schneller zu bedienen ist. Dies ist durch die Unterbrechungen der Gewindegänge hervorgerufen. Durch die Unterbrechungen besteht die Möglichkeit, den Gewindering in eine Position zu drehen, in der die Gewindegänge des Rings sich im Bereich der Unterbrechungen in den Gewindegängen des Trägers befinden. In dieser Position befinden sich die Unterbrechungen im Gewinde des Gewinderings im Bereich der Gewindegänge des Trägers. Da die Breite der Unterbrechungen größer als die Breite der Gewindegänge ist, ist in dieser Position die Gewindekombination zwischen Außengewinde des Trägers und Innengewinde des Rings nicht im Eingriff. Folglich besteht die Möglichkeit, den Gewindering auf dem Träger entlang seiner Längsachse ohne Schraubbewegung zu verschieben. Dies ist sowohl beim Lösen als auch beim Verspannen der Vorrichtung von erheblichem Vorteil. So besteht beim Verspannen die Möglichkeit, den Gewindering auf das freie Ende des Ringmantels aufzusetzen und in der beschriebenen Position mit einer einfachen Bewegung an die Geräteplatte heranzuführen. Erst in unmittelbarer Nähe der Geräteplatte erfolgt ein Drehen des Gewinderings, so dass die Gewindegänge des Trägers und des Gewinderings in Eingriff kommen. Hierdurch kann dann die Schraubbewegung, die zu einem Verspannen der Vorrichtung führt, in Eingriff treten. Gleichermaßen ist ein einfaches Lösen der Vorrichtung möglich, indem die oben beschriebene Vorgehensweise in umgekehrter Reihenfolge ausgeführt wird. Somit ist es nicht mehr erforderlich, den Gewindering entlang des gesamten Außengewindes des Trägers zum Verspannen oder Lösen zu bewegen.

In Weiterbildung der Erfindung ist der Gewindering an mindestens einer Stelle geteilt. Hierdurch besteht die Möglichkeit, den Gewindering zu spreizen und über den Ringmantel des Trägers zu bewegen. Dies bietet eine zusätzliche Erhöhung des Komforts, insbesondere in den Fällen, in denen Gegenstände mit der Vorrichtung verspannt werden, die über elektrische Anschlusskabel verfügen. Soweit die elektrischen Anschlusskabel durch das Innere des Ringmantels aus der Vorrichtung herausgeführt werden, ist es beim Verspannen und beim Lösen der Vorrichtung erforderlich, den Gewindering entlang der elektrischen Anschlusskabel bis zu deren freien Ende zu führen, um den Ring vollständig lösen zu können. Durch die Teilung des Rings besteht die Möglichkeit, den Ring zu spreizen und entweder unmittelbar auf den Ringmantel aufzusetzen oder den Ring so weit zu öffnen, dass jedenfalls ein Passieren der elektrischen Anschlusskabel ermöglicht ist.

Vorteilhaft ist der Gewindering mit einem Scharnier versehen. Mit Hilfe des Scharniers ist die Bedienung des Rings zusätzlich erleichtert. Gleichzeitig ist dem Risiko eines Zerstörens des Rings im Falle eines unbeabsichtigten zu weiten Öffnens entgegen gewirkt.

In Ausgestaltung der Erfindung ist das Scharnier nach Art eines Filmscharniers ausgebildet. Diese Art der Ausbildung des Scharniers ist fertigungstechnisch einfach und preiswert realisierbar.

Bevorzugt ist an dem Gewindering mindestens ein Verschluss vorgesehen. Das Vorsehen eines Verschluss stellt eine zuverlässige Bedienbarkeit der Vorrichtung bei geteilter Ausbildung des Rings sicher.

Vorteilhaft ist der Verschluss nach Art eines Schnappverschlusses ausgebildet. Dadurch ist eine einfache Bedienung sowohl beim Lösen als auch beim Schließen des Verschlusses gewährleistet, was insbesondere in den zum Teil schwierigen Einbausituationen der Vorrichtungen vorteilhaft

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die dreidimensionale Darstellung einer Vorrichtung zum Verspannen von Gegenständen an Geräteplatten;
- Figur 2: die Draufsicht auf einen Gewindering;
- Figur 3: die perspektivische Darstellung des in Figur 2 dargestellten Gewindering;
- Figur 4: die perspektivische Darstellung des in Figur 2 dargestellten Gewinderings in geöffneter Position;
- Figur 5: die Draufsicht auf den in Figur 4 dargestellten Gewindering;
- Figur 6: die perspektivische Darstellung eines Gewinderings in anderer Ausbildung;
- Figur 7: die perspektivische Darstellung des in Figur 6 dargestellten Gewinderings in geöffneter Position.

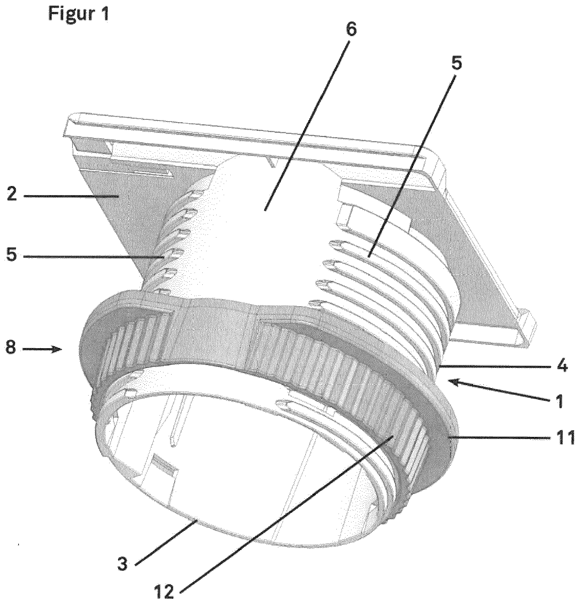

Die als Ausführungsbeispiel gewählte Vorrichtung zum Verspannen von Gegenständen an Geräteplatten umfasst einen Träger 1, der an seinem einen Ende mit einem Flansch 2 versehen ist. Der Flansch 2 liegt in montiertem Zustand der Vorrichtung auf der Geräteplatte auf. Im Ausführungsbeispiel hat der Flansch 2 eine im Wesentlichen viereckige Ausbildung und dient zur Aufnahme weiterer Bauteile, beispielsweise Steckdosen oder Einsteckplätzen für elektrische Geräte. Zudem kann an dem Flansch 2 nach Figur 1 eine Abdeckung in Form eines Deckels angebracht sein. In Abwandlung des Ausführungsbeispiels besteht die Möglichkeit, den Flansch 2 als einfachen überstehenden Rand auszubilden, der radial über den Träger 1 hervorsteht.

Der Träger 1 weist einen Ringmantel 3 auf, der mit einem Außengewinde 4 versehen ist. Das Außengewinde 4 umfasst mindestens einen Gewindegang 5. Die Gewindegänge 5 des Außengewindes 4 weisen Unterbrechungen 6 auf.

Auf das Außengewinde 4 des Ringmantels 3 ist ein Gewindering 8 aufschraubbar, der ein Innengewinde 9 mit mindestens einem Gewindegang 10 aufweist. Das Innengewinde 9 korrespondiert in montiertem Zustand mit dem Außengewinde 4 auf dem Ringmantel 3. Aufgrund der Gewindekombination ist der Gewindering 8 auf dem Ringmantel 3 axial verschraubbar. Der Gewindering 8 weist auf seiner dem Flansch 2 zugewandten Seite einen Anschlag 11 auf, mit dem die Vorrichtung an der Geräteplatte festspannbar ist. Außen ist der Gewindering 8 mit einer Riffelung 12 ausgestattet, die eine verbesserte Handhabung des Gewinderings 8 beim Auf- und Abschrauben auf dem Ringmantel 3 ermöglicht.

Das Innengewinde 9 weist Unterbrechungen 13 auf. Die Breite der Unterbrechungen 6 des Außengewindes 4 sowie die Breite der Unterbrechungen 13 des Innengewindes 9 ist größer als die Breite der Gewindegänge 5 des Außengewindes 4 und der Gewindegänge 10 des Innengewindes 9. Diese Ausgestaltung ermöglicht ein Verschieben des Gewinderings 8 auf dem Ringmantel 3 in axialer Richtung ohne Schraubbewegung. Dies ist dadurch ermöglicht, dass die Gewindegänge 10 kürzer sind als die Breite der Unterbrechung 6 auf dem Ringmantel 3. Gleichzeitig sind die Gewindegänge 5 auf dem Ringmantel 3 kürzer als die Unterbrechungen 13 des Gewinderings 8. Somit sind die Gewindegänge 5 und 10 in dieser Position freigegeben, wodurch das Verschieben entlang der Längsachse des Ringmantels 3 möglich ist. Beim Verspannen der Vorrichtung wird diese Position durch Drehen des Gewinderings 8 auf dem Ringmantel 3 aufgelöst, so dass die Gewindegänge 10 in die Gewindegänge 5 eintreten, wodurch die Schraubbewegung und damit das Verspannen der Vorrichtung erfolgt. Ein Lösen der Vorrichtung erfolgt in umgekehrter Reihenfolge. Durch das Verschieben des Gewinderings 8 auf dem Ringmantel 3 ohne Schraubbewegung führt zu einer deutlichen Beschleunigung des Verspannens bzw. Lösens der Vorrichtung, wodurch der Bedienkomfort erheblich erhöht ist.

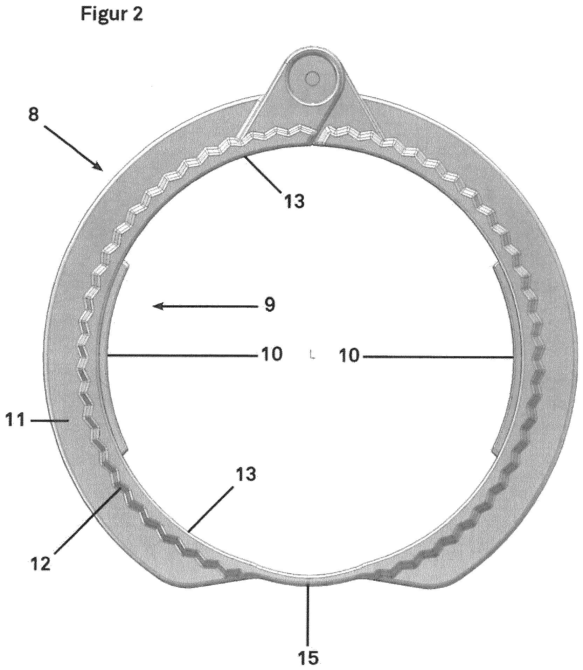

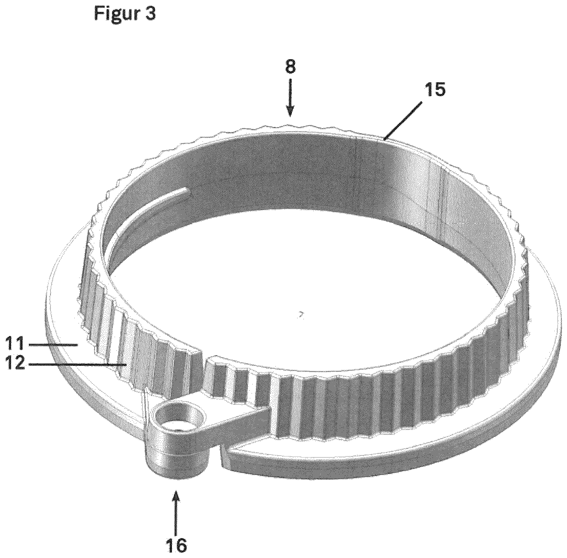

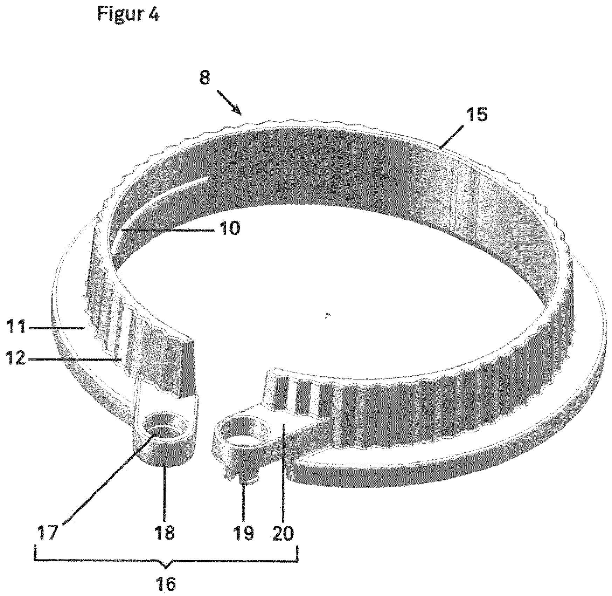

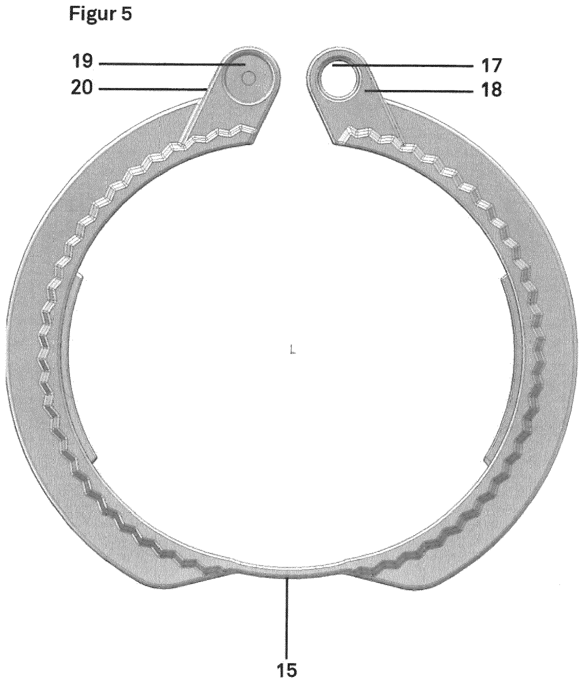

Der Gewindering 8 ist geteilt ausgeführt. Im Ausführungsbeispiel nach den Figuren 1 bis 5 ist der Gewindering 8 an einer Stelle geteilt. Der Gewindering 8 ist mit einem Scharnier 15 versehen. Das Scharnier 15 ist im Ausführungsbeispiel nach den Figuren 1 bis 5 nach Art eines Filmscharniers ausgebildet. Wie in den Figuren 4 und 5 zu erkennen ist, ist dadurch problemlos ein Öffnen des Gewinderings 8 ermöglicht. An dem Gewindering 8 ist ein Verschluss 16 vorgesehen. Der Verschluss 16 ist auf der dem Scharnier 15 gegenüberliegenden Seite an dem Gewindering 8 angeordnet. Im Ausführungsbeispiel ist der Verschluss 16 nach Art eines Schnappverschlusses ausgebildet. Der Verschluss 16 weist hierfür einen mit einem Loch 17 versehenen Ausleger 18 auf, der mit einem an einem Ausleger 20 vorgesehenen Rastelement 19 korrespondiert. Zum Schließen des Verschlusses werden die freien Enden der Ausleger 18 und 20 übereinander positioniert und das Rastelement 19 in das Loch 17 gedrückt, so dass diese miteinander verrasten. Der Gewindering 8 ist damit geschlossen und kann auf dem Ringmantel 3 sowohl mit als auch ohne Schraubbewegung axial entlang des Ringmantels 3 bewegt werden.

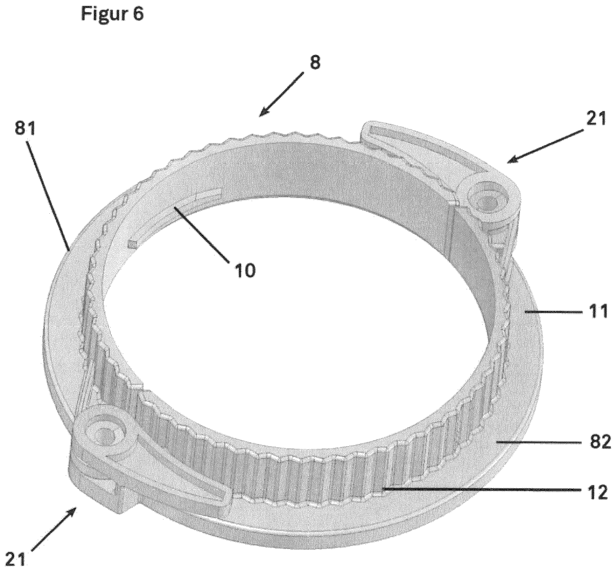

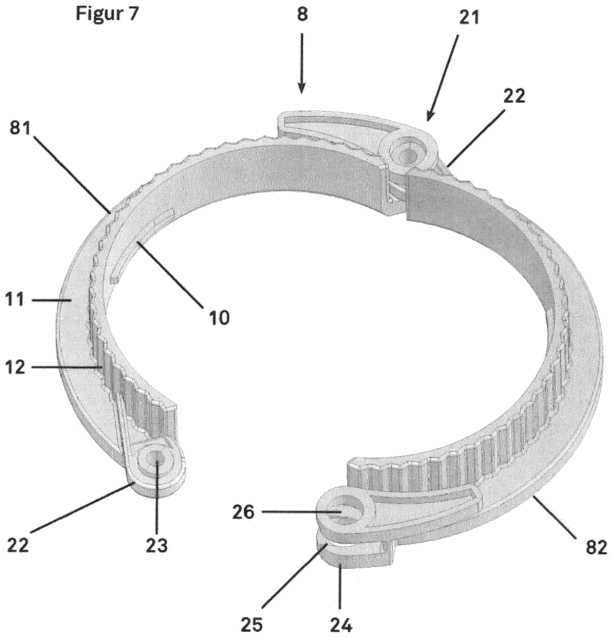

Im Ausführungsbeispiel nach den Figuren 6 und 7 ist der Gewindering 8 an zwei Stellen geteilt. Erkennbar sind dadurch zwei identisch ausgebildete Ringteile 81 und 82 hervorgerufen. Der Ring ist in diesem Fall mit zwei Verschlüssen 21 versehen, bei denen es sich ebenfalls um Schnappverschlüsse handelt. Hierzu ist an beiden Ringhälften 81 und 82 ein Ausleger 22 vorgesehen, der mit einer ringförmigen Erhebung 23 versehen ist. Der Ausleger 22 mit der Erhebung 23 korrespondiert mit einer Aufnahme 24, in der ein Spalt 25 ausgebildet ist. Die Aufnahme 24 ist mit einem Loch 26 versehen, dessen Durchmesser dem Außendurchmesser der ringförmigen Erhebung 23 entspricht. Wie in Figur 6 zu sehen ist, fasst in geschlossenem Zustand die Erhebung 23 am Ausleger 22 in das Loch 26, wodurch der Gewindering 8 geschlossen ist. Soweit nur ein Verschluss 21 geöffnet ist, fungiert der zweite Verschluss 21 als Scharnier, wie dies in Figur 7 erkennbar ist. Es besteht auch die Möglichkeit, den zweiten Verschluss ebenfalls zu öffnen, so dass die beiden Ringhälften 81 und 82 vollständig voneinander getrennt sind. Vergleichbar zu der Darstellung in Figur 4 ist auch im Ausführungsbeispiel nach den Figuren 6 und 7 ein einfaches Öffnen des Gewinderings 8 möglich, um ein Passieren des Ringmantels 3 zu ermöglichen. Sobald sich der Ringmantel 3 innerhalb des Gewinderings 8 befindet, werden die beiden Ringhälften 81 und 82 um den als Scharnier fungierenden geschlossenen Verschluss 21 auf einander zu geschwenkt, so dass der Ausleger 22 mit Erhebung 23 in die Aufnahme 24 einfährt und dort verriegelt. Der Gewindering 8 kann dann auf dem Ringmantel 3 in axialer Richtung bewegt werden. Dies kann entweder durch Verschrauben erfolgen oder durch eine drehlose Bewegung, indem die Gewindegänge 10 in Bereich der Unterbrechungen 6 des Außengewindes 4 positioniert werden. Das Verschieben und Verspannen erfolgt dann in der zum Ausführungsbeispiel nach den Figuren 1 bis 5 beschriebenen Weise.

## Patentansprüche

1. Vorrichtung zum Verspannen von Gegenständen an Geräteplatten, umfassend einen Gewindering und einen Träger (1), der an seinem einen Ende mit einem Flansch (2) versehen ist und einen mit einem Außengewinde (4) mit mindestens einem Gewindegang (5) versehenen Ringmantel (3) aufweist, auf das der Gewindering (8) aufschraubbar ist, der ein Innengewinde (9) mit mindestens einem Gewindegang (10) aufweist, wobei die Gewindegänge (10) des Innengewindes (9) und die Gewindegänge (5) des Aussengewindes (4) Unterbrechungen (6, 13) aufweisen, deren Breite größer als die Breite der Gewindegänge (5, 10) ist, wobei der Gewindering (8) an mindestens einer Stelle geteilt ist und mit einem Scharnier (15) versehen ist, **dadurch gekennzeichnet, dass** an dem Gewindering (8) mindestens ein Verschluss (16, 21) vorgesehen ist.

2. Vorrichtung nach Anspruch 1, **dadurch gekennzeichnet, dass** das Scharnier (15) nach Art eines Filmscharniers ausgebildet ist.

3. Vorrichtung nach Anspruch 1 oder 2, **dadurch gekennzeichnet, dass** der Verschluss (16, 21) nach Art eines Schnappverschlusses ausgebildet ist.

## Claims

1. Device for clamping articles to appliance plates comprising a threaded ring and a support (1), which is provided with a flange (2) at its one end and which has an annular casing (3) provided with an external thread (4) with at least one thread (5), onto which the threaded ring (8) is screwable, which has an internal thread (9) with at least one thread (10), wherein the threads (10) of the internal thread (9) and the threads (5) of the external thread (4) have discontinuities (6, 13), the width of which is greater than the width of the threads (5, 10), wherein the threaded ring (8) is divided at at least one point and is provided with a hinge (15), **characterised in that** at least one lock (16, 21) is provided at the threaded ring (8).

2. Device according to claim 1, **characterised in that** the hinge (15) is designed in the manner of a film hinge.

3. Device according to claim 1 or 2, **characterised in that** the lock (16, 21) is designed in the manner of a snap lock.

## Revendications

1. Dispositif de serrage d'objets contre des plaques d'appareils, comprenant une bague filetée et un support (1) qui en une extrémité sienne est munie d'une bride (2) et qui présente une gaine annulaire (3) dotée d'un filetage extérieur (4) comportant au moins un pas de filetage (5) sur lequel il est possible de visser la bague filetée (8) qui présente un filetage intérieur (9) composé d'au moins un pas (10), sachant que les pas (10) du filetage intérieur (9) et les pas (5) du filetage extérieur (4) présentent des interruptions (6, 13) dont la largeur est supérieure à la largeur des pas de filetage (5, 10), sachant que la bague filetée (8) est partagée en au moins un endroit et dotée d'une charnière (15), **caractérisé en ce que** contre la bague filetée (8) est prévu au moins une fermeture (16, 21).

2. Dispositif selon la revendication 1, **caractérisé en ce que** la charnière (15) est configurée en charnière souple.

3. Dispositif selon la revendication 1 ou 2, **caractérisé en ce que** la fermeture (16, 21) est configurée en fermeture à déclic.
